# EUROPÄISCHE PATENTSCHRIFT

(11) **EP 2 989 678 B1**
(45) Veröffentlichungstag und Bekanntmachung des Hinweises auf die Patenterteilung: **05.09.2018**
(21) Anmeldenummer: 14715017.1
(22) Anmeldetag: 04.04.2014
(51) Int. Cl.: H01M 10/633, H01M 10/6569, B60L 11/18, B60H 1/32, F16K 24/00, H01M 10/48, H01M 10/613, H01M 10/625

(54) **ANORDNUNG UND VERFAHREN ZUM KÜHLEN EINER TECHNISCHEN KOMPONENTE IN EINEM GEHÄUSE**
ARRANGEMENT AND METHOD FOR COOLING A TECHNICAL COMPONENT IN A HOUSING
ENSEMBLE ET PROCÉDÉ PERMETTANT DE REFROIDIR UN ÉLÉMENT TECHNIQUE DANS UN BOÎTIER

(30) Priorität: 25.04.2013 DE 102013207487
(43) Veröffentlichungstag der Anmeldung: 02.03.2016
(73) Patentinhaber: Bayerische Motoren Werke Aktiengesellschaft, 80809 München (DE)
(72) Erfinder: HEGER, Martin, 85232 Kreuzholzhausen (DE)
(86) Internationale Anmeldenummer: PCT/EP2014/056773
(87) Internationale Veröffentlichungsnummer: WO 2014/173654

(56) Entgegenhaltungen:
- WO-A1-2013/037786
- DE-A1-102010 003 257
- DE-A1-102010 030 367
- DE-A1-102010 051 687

## Beschreibung

Vorliegende Erfindung betrifft eine Anordnung und ein Verfahren zum Kühlen einer technischen Komponente, insbesondere eines Energiespeichermoduls, in einem Gehäuse. Die Anordnung und das Verfahren werden vorzugsweise in einem Fahrzeug eingesetzt.

Gehäuse, welche zur Aufnahme einer technischen Komponente, wie beispielsweise einem Energiespeichermodul (auch: Batterie), in einem Fahrzeug vorgesehen sind, müssen eine Reihe von Anforderungen erfüllen, um den wechselnden Betriebsbedingungen eines Fahrzeugs gerecht zu werden. Derartige Gehäuse dienen dazu, das Energiespeichermodul vor Umgebungseinflüssen, beispielsweise Wasser oder Schmutz, zu schützen. Ein Batteriegehäuse zum Schutz vor Umgebungseinflüssen ist in der Druckschrift DE 10 2010 051 687 A1 offenbart. Im Betrieb des Energiespeichermoduls entsteht Wärme, die typischerweise durch einen Kühler bzw. einen Kühlmittelverdampfer aus dem Inneren des Gehäuses abgeführt wird. Feuchte, die beispielsweise durch ein Druckausgleichselement in das Gehäuseinnere gelangt, kann daher aufgrund der Kühlung im Gehäuseinneren kondensieren. Dieses Kondenswasser muss abgeführt werden, um eine Beeinträchtigung im Betrieb der technischen Komponente auszuschließen. Bei der Kondensatabfuhr muss ferner berücksichtigt werden, dass durch diese keine Verunreinigungen oder weitere Flüssigkeiten in das Gehäuse eindringen können.

Zur Realisierung einer Kondensatabfuhr ist die Verwendung von Schwimmerventilen bekannt. Diese Ventile halten einen Ablaufquerschnitt am Boden des Gehäuses offen, um das Kondensat kontinuierlich abfließen zu lassen. Das Schwimmerventil schließt den Querschnitt, wenn Wasser versucht, von unten in das Gehäuseinnere einzudringen. Allerdings ist ein solches Schwimmerventil zur Kondensatabfuhr an der Bodenfläche des Gehäuses empfindlich gegenüber Verschmutzung, so dass einerseits die Kondensatabfuhr beeinträchtigt und andererseits das Eindringen von Wasser in das Gehäuse begünstigt werden kann. Letzteres kann insbesondere bei sogenannten Wattvorgängen zum Problem werden, da ein verschmutztes Schwimmerventil die Öffnung des Ventils nicht mehr zuverlässig verschließen kann. In anderen vorbekannten Anordnungen werden aktive Pumpen eingesetzt, um das Kondensat aus dem Gehäuse abzupumpen.

Es ist Aufgabe vorliegender Erfindung, eine Anordnung zum Kühlen einer technischen Komponente in einem Gehäuse bereitzustellen, die bei kostengünstiger Herstellung wartungsarm, energieeffizient und betriebssicher funktioniert. Des Weiteren ist es Aufgabe vorliegender Erfindung, ein entsprechendes Verfahren zum Betrieb der Anordnung anzugeben.

Die Lösung der Aufgabe erfolgt durch die Merkmale der unabhängigen Ansprüche. Die abhängigen Ansprüche haben bevorzugte Weiterbildungen der Erfindung zum Gegenstand.

Somit wird die Aufgabe gelöst durch eine Anordnung, welche insbesondere in einem Kraftfahrzeug verwendet wird. Die Anordnung umfasst ein Gehäuse zur Aufnahme einer technischen Komponente, wobei die technische Komponente ein Energiespeichermodul mit elektrochemischen Zellen ist und zumindest ein in das Gehäuse integriertes Druckausgleichselement und eine Kühlvorrichtung. Die Kühlvorrichtung dient zum Kühlen der technischen Komponente im Gehäuse. Dementsprechend ist zumindest ein Teil der Kühlvorrichtung im Inneren des Gehäuses angeordnet. Die Anordnung umfasst des Weiteren eine Temperaturmessstelle zum Bereitstellen eines Temperaturwerts und eine Steuervorrichtung zum Ansteuern der Kühlvorrichtung. Die Steuervorrichtung ist dazu ausgebildet, die Kühlvorrichtung anzusteuern, um bei Überschreiten eines Temperaturgrenzwertes durch den gemessenen Temperaturwert im Gehäuse eine Kühlleistung der Kühlvorrichtung zu erhöhen. Insbesondere wird erst bei Überschreiten dieses Temperaturgrenzwertes die Kühlvorrichtung aktiviert. Ziel der Erhöhung der Kühlleistung ist es, die Temperatur im Gehäuse auf einen ersten Temperaturwert zu senken. Des Weiteren ist die Steuervorrichtung dazu ausgebildet, um bei Erreichen eines gemessenen zweiten Temperaturwertes die Kühlleistung wieder zu reduzieren. Der zweite Temperaturwert liegt höher als der erste Temperaturwert. Mittels der Steuervorrichtung wird die Kühlleistung also bereits reduziert, insbesondere auf Null, noch bevor der gewünschte erste Temperaturwert erreicht wird. Dadurch verbleibt eine thermische Restenergie in der technischen Komponente. Diese wird zum Verdampfen des durch die Kühlung verursachten Kondenswassers im Inneren des Gehäuses verwendet. Ein sich bildendes Kondenswasser wird also durch die thermische Restenergie verdampft und kann durch das Druckausgleichselement nach außen strömen. Erfindungsgemäß muss kein Wasser im flüssigen Zustand aus dem Gehäuse abgeführt werden. Das Wasser wird verdampft und kann im dampfförmigen Zustand über das Druckausgleichselement abgeführt werden.

Die technische Komponente ist ein Energiespeichermodul mit elektrochemischen Zellen. Insbesondere handelt es sich hierbei um ein Hochvoltenergiespeichermodul, das zum alleinigen oder unterstützenden elektrischen Antrieb des Kraftfahrzeugs verwendet wird. Insbesondere die Energiespeichermodule müssen zum einen sicher in einem Gehäuse eingeschlossen werden und brauchen zum anderen eine effektive Kühlung. Hier ist die Erfindung besonders bevorzugt anzuwenden.

Des Weiteren ist bevorzugt vorgesehen, dass die Steuervorrichtung dazu ausgebildet ist, um ab dem zweiten Temperaturwert die Kühlvorrichtung vollständig abzuschalten. Die Kühlleistung wird ab dem zweiten Temperaturwert also nicht nur reduziert, sondern die Kühlvorrichtung wird vollständig deaktiviert.

Das Gehäuse ist vorzugsweise fluiddicht ausgestaltet und es sind keine Öffnungen zum Abführen von Kondenswasser in flüssiger Form vorgesehen. Selbstverständlich können Leitungen, z.B. für Kühlflüssigkeit, die Gehäusewand durchbrechen.

Das Druckausgleichselement umfasst bevorzugt eine Membran. Die Membran ist wasserdampfdurchlässig und wasserundurchlässig. Dadurch ist ein Druckausgleich über das Druckausgleichselement möglich. Wasser in flüssiger Form kann durch das Druckausgleichselement nicht ein- oder ausdringen.

Die Erfindung umfasst des Weiteren ein Verfahren zum Betrieb der beschriebenen Anordnung, insbesondere in einem Kraftfahrzeug, wobei die Anordnung ein Gehäuse zur Aufnahme einer technischen Komponente umfasst, wobei die technische Komponente ein Energiespeichermodul mit elektrochemischen Zellen ist, und in das Gehäuse zumindest ein Druckausgleichselement integriert ist, wobei die Anordnung ferner eine Kühlvorrichtung zum Kühlen des Energiespeichermoduls, eine Temperaturmessstelle zum Bereitstellen eines Temperaturwerts und eine Steuervorrichtung zum Ansteuern der Kühlvorrichtung umfasst. Das Verfahren umfasst die folgenden Schritte: (i) Kühlen der technischen Komponente bei Überschreiten eines Temperaturgrenzwerts durch den gemessenen Temperaturwert, mit dem Ziel im Gehäuse einen ersten Temperaturwert zu erreichen, wobei beim Kühlen sich Kondenswasser im Gehäuse bildet, (ii) Reduzieren der Kühlleistung, sobald ein gemessener zweiter Temperaturwert im Gehäuse erreicht ist, um mit der thermischen Restenergie der technischen Komponente das Kondenswasser im Gehäuse zu verdampfen, wobei der zweite Temperaturwert höher ist als der erste Temperaturwert, und (iii) Abführen des verdampften Kondenswassers über das zumindest eine Druckausgleichselement.

Die Unteransprüche und die vorteilhaften Ausgestaltungen der erfindungsgemäßen Anordnung finden entsprechend vorteilhafte Anwendung für das erfindungsgemäße Verfahren.

Insbesondere ist vorgesehen, dass der zweite Temperaturwert in Abhängigkeit der Dauer eines Kühlvorgangs und/oder in Abhängigkeit einer Umgebungstemperatur und/oder in Abhängigkeit einer Umgebungsfeuchtigkeit und/oder in Abhängigkeit eines Standortes und/oder in Abhängigkeit einer gemessenen Kondenswassermenge im Gehäuse bestimmt wird. Die Höhe des zweiten Temperaturwertes, insbesondere der Abstand zwischen dem ersten Temperaturwert und dem zweiten Temperaturwert, bestimmt, wie viel thermische Restenergie in der technischen Komponente verbleibt und zum Verdampfen des Kondenswassers genutzt werden kann. Wird die Umgebungstemperatur und/oder die Umgebungsfeuchtigkeit genutzt, so wird diese bevorzugt außerhalb des Gehäuses gemessen. Bei einer Bestimmung des Standortes, beispielsweise mit Satellitennavigation, kann aufgrund der Standortdaten auf eine entsprechende Umgebungstemperatur oder Umgebungsfeuchtigkeit geschlossen werden. Diese Daten wiederum erlauben einen Rückschluss auf die zu erwartende Kondenswassermenge.

Des Weiteren ist bevorzugt vorgesehen, den zweiten Temperaturwert in Abhängigkeit des ersten Temperaturwertes absolut festzusetzen. Der zweite Temperaturwert liegt dabei zumindest bei 105%, vorzugsweise zumindest bei 110%, besonders vorzugsweise zumindest bei 115% des ersten Temperaturwertes.

Der erste Temperaturwert gibt eine optimale Betriebstemperatur der technischen Komponente vor. Insbesondere liegt der erste Temperaturwert unterhalb des Temperaturgrenzwertes, ab dem die Kühlleistung erhöht wird.

Der erste Temperaturwert und der zweite Temperaturwert werden bevorzugt an derselben Stelle gemessen. Insbesondere werden diese Temperaturwerte direkt an der technischen Komponente gemessen.

Die Erfindung zeigt eine Anordnung und ein Verfahren zur effizienten Kühlung einer technischen Komponente in einem Gehäuse eines Kraftfahrzeugs. Durch die Erfindung entfallen auffällige Konstruktionen zum Abführen des Kondenswassers, wodurch die Kosten der Anordnung reduziert werden können. Da keine beweglichen Teile zum Abführen des Kondenswassers genutzt werden, sinkt die Fehleranfälligkeit. Es bedarf keiner eigenen Montage von bestimmten Teilen zum Abführen des Kondenswassers, wodurch die Produktionskosten sinken. Da keine beweglichen Teile verwendet werden, besteht nicht die Gefahr einer Verschmutzung. Das Druckausgleichselement stellt die einzige Verbindung zur Umgebung dar. Durch die Membran kann keine Verschmutzung eindringen.

Weitere Einzelheiten, Merkmale und Vorteile der Erfindung ergeben sich aus der nachfolgenden Beschreibung und den Figuren. Es zeigen:
- Figur 1: eine schematische Ansicht einer erfindungsgemäßen Anordnung gemäß einem Ausführungsbeispiel in einem ersten Zustand, und
- Figur 2: eine schematische Ansicht der erfindungsgemäßen Anordnung gemäß dem Ausführungsbeispiel in einem zweiten Zustand.

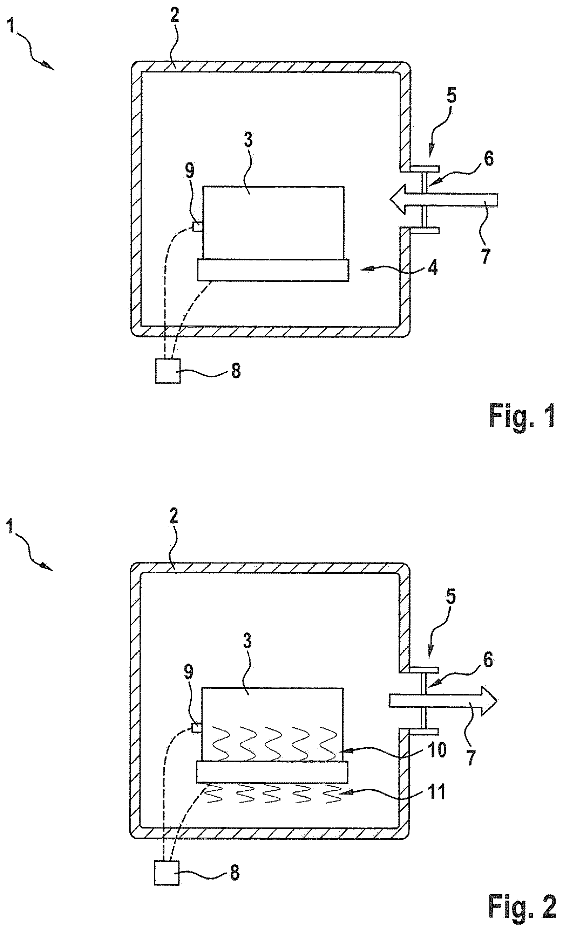

Figuren 1 und 2 zeigen eine Anordnung 1, umfassend ein Gehäuse 2, in dem eine technische Komponente 3 angeordnet ist. Das Gehäuse 2 wird insbesondere auf einem Kraftfahrzeug montiert. Die technische Komponente 3 ist insbesondere ein Energiespeichermodul.

In der Wandung des Gehäuses 2 ist ein Druckausgleichselement 5 integriert. Dieses Druckausgleichselement 5 umfasst eine Membran 6. Die Membran 6 ist wasserdampfdurchlässig und wasserundurchlässig.

An der technischen Komponente 3 ist eine Temperaturmessstelle 9 vorgesehen. Des Weiteren befindet sich im Gehäuse 2 eine Kühlvorrichtung 4 zum Kühlen der technischen Komponente 3.

Die Temperaturmessstelle 9 und die Kühlvorrichtung 4 sind mit einer Steuervorrichtung 8 verbunden.

Figur 1 zeigt einen Zustand, in dem die Kühlvorrichtung 4 aktiviert ist und somit den Innenraum des Gehäuses 2 kühlt. Dabei tritt über die Membran 6 Luft und entsprechende Feuchtigkeit gemäß der eingezeichneten Strömung 7 in das Gehäuse 2 ein. Die Luftfeuchtigkeit führt zu einer Kondenswasserbildung im Inneren des Gehäuses 2. Insbesondere setzt sich das Kondenswasser an der technischen Komponente 3 und an der Kühlvorrichtung 4 ab.

Noch bevor die gewünschte, optimale Temperatur in dem Gehäuse 2 erreicht wird, wird die Kühlvorrichtung 4 mittels der Steuervorrichtung 8 abgeschaltet. Diesen Zustand zeigt Figur 2. In der technischen Komponente 3 verbleibt somit eine thermische Restenergie 10, die das Kondenswasser 11 im Gehäuse 2 dampft. Das verdampfte Kondenswasser tritt gemäß der eingezeichneten Strömung 7 durch die Membran 6 des Druckausgleichselementes 5 aus.

## Patentansprüche

1. Anordnung (1), insbesondere für ein Kraftfahrzeug, umfassend
- ein Gehäuse (2) zur Aufnahme einer technischen Komponente (3), wobei die technische Komponente (3) ein Energiespeichermodul mit elektrochemischen Zellen ist,
- zumindest ein in das Gehäuse (2) integriertes Druckausgleichselement (5),
- eine Kühlvorrichtung (4) zum Kühlen der technischen Komponente (3) im Gehäuse (2),
- eine Temperaturmessstelle (9) zum Bereitstellen eines Temperaturwerts, und
- eine Steuervorrichtung (8) zum Ansteuern der Kühlvorrichtung (4), wobei die Steuervorrichtung (8) dazu ausgebildet ist, um
• bei Überschreiten eines Temperaturgrenzwertes durch den gemessenen Temperaturwert im Gehäuse (2) eine Kühlleistung der Kühlvorrichtung (4) zu erhöhen, um im Gehäuse (2) einen ersten Temperaturwert zu erreichen, und
• die Kühlleistung nach dem Erhöhen ab einem gemessenen zweiten Temperaturwert im Gehäuse (2) so zu reduzieren, dass eine thermische Restenergie (10) der technischen Komponente (3) zum Verdampfen des durch die Kühlung verursachten Kondenswassers (11) im Gehäuse (2) ausreicht, wobei der zweite Temperaturwert höher ist als der erste Temperaturwert.

2. Anordnung nach Anspruch 1, **dadurch gekennzeichnet, dass** die technische Komponente (3) ein Hochvoltenergiespeichermodul ist.

3. Anordnung nach einem der vorhergehenden Ansprüche, **dadurch gekennzeichnet, dass** die Steuervorrichtung (8) dazu ausgebildet ist, um ab dem zweiten Temperaturwert die Kühlvorrichtung (4) abzuschalten.

4. Anordnung nach einem der vorhergehenden Ansprüche, **dadurch gekennzeichnet, dass** das Gehäuse (2) fluiddicht ausgestaltet ist und keine Öffnungen für die Abfuhr von flüssigem Kondenswasser (11) aus dem Gehäuse (2) aufweist.

5. Anordnung nach einem der vorhergehenden Ansprüche, **dadurch gekennzeichnet, dass** das Druckausgleichselement (5) eine Membran (6) umfasst, die wasserdampfdurchlässig und wasserundurchlässig ist.

6. Verfahren zum Betrieb einer Anordnung (1), insbesondere in einem Kraftfahrzeug, wobei die Anordnung (1) ein Gehäuse (2) zur Aufnahme einer technischen Komponente (3) umfasst, wobei die technische Komponente (3) ein Energiespeichermodul mit elektrochemischen Zellen ist, und in das Gehäuse (2) zumindest ein Druckausgleichselement (5) integriert ist, wobei die Anordnung (1) ferner eine Kühlvorrichtung (4) zum Kühlen des Energiespeichermoduls (3), eine Temperaturmessstelle (9) zum Bereitstellen eines Temperaturwerts und eine Steuervorrichtung (8) zum Ansteuern der Kühlvorrichtung (4) umfasst, mit folgenden Schritten:
- Kühlen der technischen Komponente (3) bei Überschreiten eines Temperaturgrenzwerts durch den gemessenen Temperaturwert, um im Gehäuse (2) einen ersten Temperaturwert zu erreichen, wobei beim Kühlen sich Kondenswasser (11) im Gehäuse (2) bildet,
- Reduzieren einer Kühlleistung ab einem gemessenen zweiten Temperaturwert im Gehäuse (2), um mit der thermischen Restenergie (10) der technischen Komponente (3) das Kondenswasser (11) im Gehäuse (2) zu verdampfen, wobei der zweite Temperaturwert höher ist als der erste Temperaturwert, und
- Abführen des verdampften Kondenswassers (11) über das zumindest eine Druckausgleichselement (5).

7. Verfahren nach Anspruch 6, **dadurch gekennzeichnet, dass** ab dem zweiten Temperaturwert die Kühlleistung auf Null reduziert wird.

8. Verfahren nach einem der Ansprüche 6 oder 7, **dadurch gekennzeichnet, dass** die Höhe des zweiten Temperaturwertes in Abhängigkeit der Dauer eines Kühlvorgangs und/oder in Abhängigkeit einer Umgebungstemperatur und/oder in Abhängigkeit einer Umgebungsfeuchtigkeit und/oder in Abhängigkeit eines Standortes und/oder in Abhängigkeit einer gemessenen Kondenswassermenge im Gehäuse (2) bestimmt wird.

9. Verfahren nach einem der Ansprüche 6 bis 8, **dadurch gekennzeichnet, dass** der zweite Temperaturwert zumindest 105%, vorzugsweise zumindest 110%, besonders vorzugsweise zumindest 115%, des ersten Temperaturwerts beträgt.

10. Verfahren nach einem der Ansprüche 6 bis 9, **dadurch gekennzeichnet, dass** der erste Temperaturwert und der zweite Temperaturwert an derselben Stelle, vorzugsweise an der technischen Komponente (3), gemessen werden.

## Claims

1. An arrangement (1), especially for a motor vehicle, comprising
- a housing (2) for accommodating a technical component (3), wherein the technical component (3) is an energy storage module with electrochemical cells,
- at least one pressure equalisation element (5) integrated in the housing (2),
- a cooling device (4) for cooling the technical component (3) in the housing (2),
- a temperature measurement site (9) for providing a temperature value, and
- a control device (8) for actuating the cooling device (4), wherein the control device (8) is designed in order,
• upon a temperature limit value being exceeded by the measured temperature value in the housing (2), to increase a cooling capacity of the cooling device (4) in order to attain a first temperature value in the housing (2), and
• after the increase, to reduce the cooling capacity, starting from a measured second temperature value in the housing (2), such that a thermal residual energy (10) of the technical component (3) is sufficient to evaporate the condensed water (11) in the housing (2) which is caused by the cooling, the second temperature value being higher than the first temperature value.

2. An arrangement according to Claim 1, **characterised in that** the technical component (3) is a high-voltage energy storage module.

3. An arrangement according to one of the preceding claims, **characterised in that** the control device (8) is designed to switch off the cooling device (4) starting from the second temperature value.

4. An arrangement according to one of the preceding claims, **characterised in that** the housing (2) is configured to be fluid-tight and has no openings for removing liquid condensed water (11) from the housing (2).

5. An arrangement according to one of the preceding claims, **characterised in that** the pressure equalisation element (5) comprises a membrane (6) which is permeable to water vapour and impermeable to water.

6. A method for operating an arrangement (1), especially in a motor vehicle, wherein the arrangement (1) comprises a housing (2) for accommodating a technical component (3), wherein the technical component (3) is an energy storage module with electrochemical cells, and at least one pressure equalisation element (5) is integrated in the housing (2), wherein the arrangement (1) further comprises a cooling device (4) for cooling the energy storage module (3), a temperature measurement site (9) for providing a temperature value, and a control device (8) for actuating the cooling device (4), having the following steps:
- cooling the technical component (3) upon the measured temperature value exceeding a temperature limit value, in order to attain a first temperature value in the housing (2), with condensed water (11) forming in the housing (2) upon the cooling,
- reducing a cooling capacity, starting from a measured second temperature value in the housing (2), in order to evaporate the condensed water (11) in the housing (2) with the thermal residual energy (10) of the technical component (3), the second temperature value being higher than the first temperature value, and
- removing the evaporated condensed water (11) via the at least one pressure equalisation element (5).

7. A method according to Claim 6, **characterised in that** starting from the second temperature value the cooling capacity is reduced to zero.

8. A method according to one of Claims 6 or 7, **characterised in that** the level of the second temperature value is determined as a function of the duration of a cooling operation and/or as a function of an ambient temperature and/or as a function of an ambient humidity and/or as a function of a location and/or as a function of a measured amount of condensed water in the housing (2).

9. A method according to one of Claims 6 to 8, **characterised in that** the second temperature value is at least 105%, preferably at least 110%, especially preferably at least 115%, of the first temperature value.

10. A method according to one of Claims 6 to 9, **characterised in that** the first temperature value and the second temperature value are measured at the same site, preferably on the technical component (3).

## Revendications

1. Agencement (1), en particulier destiné à un véhicule, comprenant :
- un boîtier (2) destiné à recevoir un composant technique (3), ce composant technique (3) étant un module accumulateur d'énergie équipé de cellules électrochimiques,
- au moins un élément d'équilibrage de pression (5) intégré dans le boîtier (2),
- un dispositif de refroidissement (4) permettant de refroidir le composant technique (3) situé dans le boîtier (2),
- un emplacement de mesure de la température (9) permettant de fournir une valeur de la température, et
- un dispositif de commande (8) permettant de commander le dispositif de refroidissement (4), le dispositif de commande (8) étant réalisé pour permettre :
• lors d'un dépassement d'une valeur limite de la température par la valeur de la température mesurée dans le boîtier (2), d'augmenter la puissance de refroidissement du dispositif de refroidissement (4) pour atteindre une première valeur de température dans le boîtier (2), et
• de réduire la puissance de refroidissement après l'augmentation à partir d'une seconde valeur de la température mesurée dans le boîtier (2) de sorte que l'énergie thermique résiduelle (10) du composant thermique (3) soit suffisante pour vaporiser l'eau de condensation (11) créée par le refroidissement dans le boîtier (2), la seconde valeur de la température étant supérieure à la première valeur de la température.

2. Agencement conforme à la revendication 1,
**caractérisé en ce que**
le composant technique (3) est un module accumulateur d'énergie haute tension.

3. Agencement conforme à l'une des revendications précédentes,
**caractérisé en ce que**
le dispositif de commande (8) est réalisé pour permettre de couper le dispositif de refroidissement (4) à partir de la seconde valeur de la température.

4. Agencement conforme à l'une des revendications précédentes,
**caractérisé en ce que**
le boîtier (2) est étanche aux fluides et ne comporte pas d'ouverture permettant l'extraction d'eau de condensation liquide (11) du boîtier (2).

5. Agencement conforme à l'une des revendications précédentes,
**caractérisé en ce que**
l'élément d'équilibrage de la pression (5) comporte une membrane (6) qui est perméable à la vapeur d'eau et imperméable à l'eau.

6. Procédé permettant de faire fonctionner un agencement (1), en particulier dans un véhicule, l'agencement (1) comprenant un boîtier (2) permettant la réception d'un composant technique (3), ce composant technique (3) étant un module accumulateur d'énergie équipé de cellules électrochimiques et un élément d'équilibrage de la pression (5) étant intégré dans le boîtier (2), l'agencement (1) comprenant en outre un dispositif de refroidissement (4) permettant de refroidir le module accumulateur d'énergie (3), un emplacement de mesure de la température (9) permettant de fournir une valeur de la température et un dispositif de commande (8) permettant de commander le dispositif de refroidissement (4),
ce procédé comprenant les étapes suivantes consistant à :
- refroidir le composant technique (3) en cas de dépassement d'une valeur limite de la température par la valeur de la température mesurée pour atteindre une première valeur de la température dans le boîtier (2), lors du refroidissement de l'eau de condensation (11) étant formée dans le boîtier (2),
- réduire la puissance de refroidissement à partir d'une seconde valeur de température mesurée dans le boîtier (2) pour permettre de vaporiser l'eau de condensation (11) dans le boîtier (2), avec l'énergie thermique résiduelle (10) du composant technique (3), la seconde valeur de la température étant supérieure à la première valeur de la température, et
- évacuer l'eau de condensation vaporisée (11) par l'intermédiaire de l'élément d'équilibrage de la pression (5).

7. Procédé conforme à la revendication 6,
**caractérisé en ce qu'**
à partir de la seconde valeur de la température, la puissance de refroidissement est réduite à zéro.

8. Procédé conforme à l'une des revendications 6 et 7,
**caractérisé en ce que**
la valeur de la seconde valeur de la température est déterminée en fonction de la durée d'un processus de refroidissement et/ou en fonction de la température ambiante et/ou en fonction de l'humidité ambiante et/ou en fonction du lieu et/ou en fonction de la quantité d'eau condensée mesurée dans le boîtier (2).

9. Procédé conforme à l'une des revendications 6 à 8,
**caractérisé en ce que**
la seconde valeur de la température est égale à au moins 105%, de préférence à au moins 110%, et de façon particulièrement préférentielle, à au moins 115% de la première valeur de la température.

10. Procédé conforme à l'une des revendications 6 à 9,
**caractérisé en ce que**
la première valeur de la température et la seconde valeur de la température sont mesurées sur le même emplacement, de préférence sur le composant technique (3).
